# EUROPÄISCHE PATENTSCHRIFT

(11) **EP 1 998 009 B1**
(45) Veröffentlichungstag und Bekanntmachung des Hinweises auf die Patenterteilung: **27.10.2010**
(21) Anmeldenummer: 08156335.5
(22) Anmeldetag: 16.05.2008
(51) Int. Cl.: F01D 25/16, F16C 17/10, F16C 33/10, F16C 35/02, F16C 43/02

(54) **Lagereinrichtung**
Bearing device
Dispositif de palier

(30) Priorität: 30.05.2007 DE 102007025202
(43) Veröffentlichungstag der Anmeldung: 03.12.2008
(73) Patentinhaber: Bosch Mahle Turbo Systems GmbH & Co. KG, 70376 Stuttgart (DE)
(72) Erfinder: Ahrens, Thomas, 29379, Knesebeck (DE); Weisz, Rafael, 71334 Waiblingen (DE)
(74) Vertreter: BRP Renaud & Partner

(56) Entgegenhaltungen:
- WO-A1-99/07982
- DE-A1- 1 400 334
- DE-B- 1 221 489
- DE-U1- 8 529 861

## Beschreibung

Die vorliegende Erfindung betrifft eine Lagereinrichtung, insbesondere für eine, ein Verdichterrad und ein Turbinenrad tragende Welle in einem Gehäuse eines Abgasturboladers gemäß dem Oberbegriff des Anspruchs 1. Die Erfindung betrifft außerdem eine mit einer derartigen Lagereinrichtung ausgestatten Ladeeinrichtung.

Aus der US 3,043,636 ist eine Lagereinrichtung für eine schnelllaufende Welle, insbesondere in einem Abgasturbolader bekannt. Die Lagereinrichtung weist dabei eine Lagerbuchse mit einem stirnendseitig angeordneten und in radialer Richtung abstehenden Flansch beziehungsweise Kragen auf und ist als hydrodynamisches Gleitlager ausgebildet, wobei eine Verdrehung der Lagerbuchse relativ zu einem Gehäuse des Abgasturboladers über eine Stiftverbindung verhindert wird. Eine Axialfixierung der Lagerbuchse wird dabei über zwei, sich jeweils stirnendseitig an die Lagerbuchse anschließende Sicherungsringe bewirkt.

Aus der US 4,704,075 ist ein wassergekühlter Abgasturbolader bekannt, welcher ebenfalls eine Lagerbuchse mit einem stirnendseitig angeordneten und in Radialrichtung abstehenden Flansch zur Lagerung einer, ein Verdichterrad und ein Turbinenrad tragenden Welle aufweist.

Aus der US 5,509,738 ist eine zusammengesetzte Gleitlagerbuchse bekannt, welche insbesondere auf einer Innenseite eine Kunststoffbeschichtung aufweist.

Aus der DE 1 221 489, aus der DE 85 29 861 U1 sowie aus der WO 99/07982 A1 sind weitere Lageranordnungen für Rotoren in Ladeeinrichtungen bekannt.

Schließlich ist aus der DE 40 12 361 A1 eine Ladeeinrichtung mit zwei Lagerelementen zur Lagerung einer, ein Verdichterrad und ein Turbinenrad tragenden Welle bekannt, welche mittels Schnappringen in Axialrichtung gehalten sind.

Allen aus dem Stand der Technik bekannten Lagereinrichtungen ist dabei gemein, dass eine Montage derselben in einem Lagergehäuse einer Ladeeinrichtung mit einem hohen Montageaufwand verbunden ist.

Die vorliegende Erfindung beschäftigt sich mit dem Problem, für eine Lagereinrichtung der gattungsgemäßen Art eine verbesserte Ausführungsform zu geben, welche sich insbesondere durch eine vereinfachte Montage der Welle einer Ladeeinrichtung auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zwei Lagerbuchsen einzusetzen, welche jeweils stirnseitig einen radialen Flansch aufweisen. Diese beiden Lagerbuchsen werden in einem Gehäuse einer Ladeeinrichtung, beispielsweise eines Abgasturboladers so angeordnet, dass ihre Flansche voneinander abgewandt sind. Eine axiale Abstützung der beiden Lagerbuchsen erfolgt dabei über ihren jeweiligen Flansch an einer zugehörigen gehäuseseitigen Anlagefläche. Die gehäuseseitigen Anlageflächen definieren somit einen minimalen Axialabstand der beiden Lagerbuchsen voneinander, wobei ein maximaler Axialabstand durch einen Druck eines Lagerfluidstromes bestimmt wird, welcher auf den voneinander abgewandten Stirnseiten der Flansche austritt und dadurch die Lagerbuchse gegen die gehäuseseitigen Anlageflächen drückt. Die beiden Lagerbuchsen sind dabei miteinander verbunden. Generell sind dabei die beiden Lagerbuchsen als hydrodynamische Gleitlager ausgebildet, bei denen zwischen der Welle und der jeweiligen Lagerbuchse der Lagerfluidstrom strömen kann. Durch die Ausbildung der Lagereinrichtung mit den zwei beschriebenen, jeweils einen Flansch aufweisenden Lagerbuchsen, wird die Montage der Lagereinrichtung deutlich vereinfacht, da die erste Lagerbuchse zusammen mit dem bereits auf der Welle befestigten Turbinen- oder Verdichterrad in das Lagergehäuse eingeschoben werden kann, während dann die zweite Lagerbuchse von der gegenüberliegenden Seite auf die Welle aufgeschoben werden kann, bis sie mit ihrem Flansch an der gehäuseseitigen Anlagefläche anliegt. Daraufhin kann das noch fehlende Verdichter- beziehungsweise Turbinenrad beziehungsweise ein zwischen der zweiten Lagerbuchse und dem noch fehlenden Turbinen-/Verdichterrad liegendes Lagerelement auf der Welle befestigt werden. Bisher erforderliche Spreng- beziehungsweise Spannringe, deren Montage zum Teil sehr aufwendig ist, sind nicht erforderlich.

Zweckmäßig verbleibt zwischen der jeweiligen Lagerbuchse und dem Gehäuse ein Radialspalt, so dass bei den beiden Lagerbuchsen ein Lagerfluidstrom während des Betriebes der Ladeeinrichtung auch zwischen der jeweiligen Lagerbuchse und dem Gehäuse strömen kann. Die Lagerbuchse wird somit innen und außen vom Lagerfluidstrom durch- beziehungsweise umströmt, wodurch eine Schwingungsübertragung zwischen der Lagerbuchse und dem Gehäuse der Ladeeinrichtung reduziert werden kann. Der die Lagerbuchse umströmende Lagerfluidstrom wirkt dabei als hydraulische Dämpfung, wodurch insbesondere auch eine Geräuschentwicklung beziehungsweise eine Vibrationsneigung einer mit der erfindungsgemäßen Lagereinrichtung ausgestattete Ladeeinrichtung reduziert werden kann.

Bei einer weiteren vorteilhaften Ausführungsform der erfindungsgemäßen Lösung ist verdichterradseitig und turbinenradseitig jeweils ein Lagerelement vorgesehen, welches unter Bildung eines Axialspaltes zu einer der beiden Lagerbuchsen angeordnet ist und die Welle im Gehäuse lagert. Das jeweilige Lagerelement dient dabei mit seiner der zugehörigen Lagerbuchse zugewandten Stirnseite als Abstützfläche für den im Axialspalt austretenden Lagerfluidstrom, wodurch letzterer bewirkt, dass die jeweilige Lagerbuchse mit ihrem Flansch an die gehäuseseitige Anlagefläche gedrückt wird. Die Lagerbuchsen sind somit schwimmend gelagert, wobei ein minimaler Abstand der beiden Lagerbuchsen zueinander vom Maximalabstand der beiden gehäuseseitigen Anlageflächen bestimmt wird, während ein maximaler Axialabstand der beiden Lagerbuchsen zueinander durch einen Axialabstand der beiden Lagerelemente zueinander und dadurch durch eine Breite des Axialspaltes zwischen dem jeweiligen Lagerelement und der zugehörigen Lagerbuchse bestimmt wird.

Zweckmäßig weist jede Lagerbuchse eine Verdrehsicherung auf, die vorzugsweise in der Art zumindest einer lagerbuchsenseitig nach radial außen vorstehenden Kontur ausgebildet ist, welche in eine gehäuseseitige Ausnehmung eingreift. Ein Beispiel für eine derartige lagerbuchsenseitige Kontur ist eine Axialrippe auf der Außenmantelfläche der Lagerbuchse. Durch eine derartige Verdrehsicherung kann zum einen eine Verdrehung der jeweiligen Lagerbuchse zuverlässig unterbunden werden und zum anderen ist trotz der Verdrehsicherung eine denkbar einfache Montage der Lagerbuchsen im Gehäuse möglich, da die Lagerbuchse bei der Montage lediglich so gedreht werden muss, dass die lagerbuchsenseitige Kontur in die gehäuseseitige Ausnehmung eingeschoben werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine Ladeein- richtung mit einer Lagereinrichtung nach dem Stand der Technik,
- Fig. 2: eine Darstellung wie in Fig. 1, jedoch bei einer anderen Ausführungsform,
- Fig. 3: eine erfindungsgemäße Lagerbuchse,
- Fig. 4: eine Ansicht auf einen stirnseitigen Flansch der Lagerbuchse,
- Fig. 5: eine Seitenansicht auf die Lagerbuchse,
- Fig. 6a und b: verschiedene Schnittdarstellungen durch die Lagerbuchse,
- Fig. 7: eine Detailskizze gemäß dem Detailausschnitt mit der Bezeichnung VII aus Fig. 5,
- Fig. 8: eine Schnittdarstellung durch eine Ladeeinrichtung mit einer erfindungsgemäß Lagereinrichtung,
- Fig. 9: eine Darstellung wie in Fig. 8, jedoch bei einer anderen Ausführungsform,
- Fig. 10: eine Vedrehsicherung für die erfindungsgemäße Lagereinrichtung,
- Fig. 11: die Verdrehsicherung nach Fig. 10 in einge- bautem Zustand.

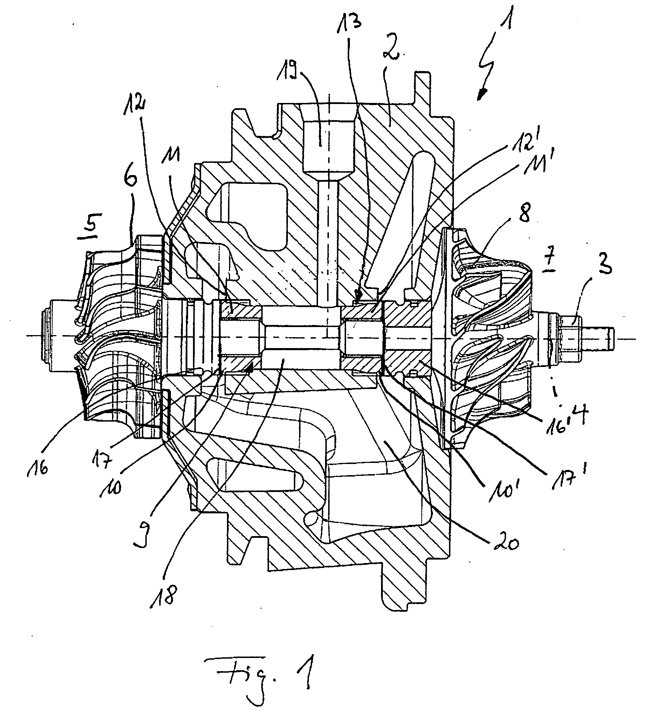

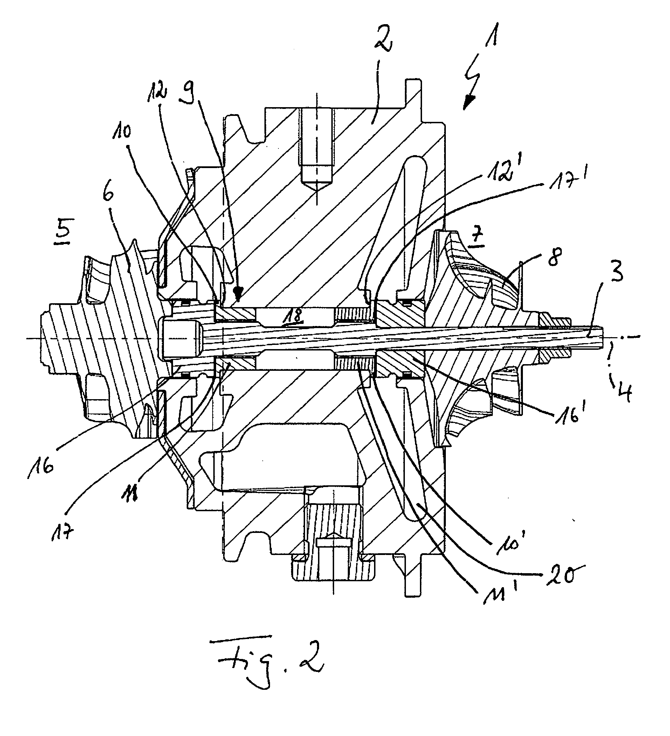

Entsprechend den Fig. 1 und 2, weist eine Ladeeinrichtung 1, welche insbesondere als Abgasturbolader für ein nicht dargestelltes Kraftfahrzeug ausgebildet sein kann, ein Gehäuse 2 mit einer darin drehbar angeordneten Welle 3 auf. Die Welle 3 ist um eine Rotationsachse 4 drehbar gelagert und weist auf einer Turbinenseite 5 ein Turbinenrad 6 und auf einer Verdichterseite 7 ein Verdichterrad 8 auf. Das Turbinenrad 6 kann dabei von einem Abgasstrom eines mit der Ladeeinrichtung 1 ausgerüsteten Verbrennungsmotors angetrieben werden, wobei die Drehbewegung über die Welle 3 auf das Verdichterrad 8 übertragen und damit die der Verbrennung im Verbrennungsmotor zugeführte Luft verdichtet wird.

Die Welle 3 ist gemäß den Fig. 1 und 2 über eine Lagereinrichtung 9 am Gehäuse 2 gelagert, wobei die Lagereinrichtung 9 zwei, jeweils stirnseitig einen radialen Flansch 10, 10' aufweisende Lagerbuchsen 11, 11' umfasst. Die beiden Lagerbuchsen 11, 11' sind dabei so zueinander angeordnet, dass ihre Flansche 10, 10' voneinander abgewandt sind. Über ihren jeweiligen Flansch 10, 10' stützen sich die beiden Lagerbuchsen 11, 11' an einer zugehörigen gehäuseseitigen Anlagefläche 12, 12' ab, wodurch ein Minimalabstand der beiden Lagerbuchsen 11, 11' zueinander vorbestimmt ist. Beide Lagerbuchsen 11, 11' sind dabei als hydrodynamische Gleitlager ausgebildet, bei denen ein Lagerfluidstrom, beispielsweise Öl, Kühlfluid oder Wasser, zumindest zwischen der jeweiligen Lagerbuchse 11, 11' und der zu lagernden Welle 3 strömen kann. Ein derartiges hydrodynamisches Gleitlager bewirkt, dass die Welle 3 ohne direkten Kontakt zur Lagerbuchse 11, 11' gelagert ist. Sie gleitet dabei auf einem zwischen den Lagerbuchsen 11, 11' und der Welle 3 ausgebildeten Film aus dem Lagerfluidstrom.

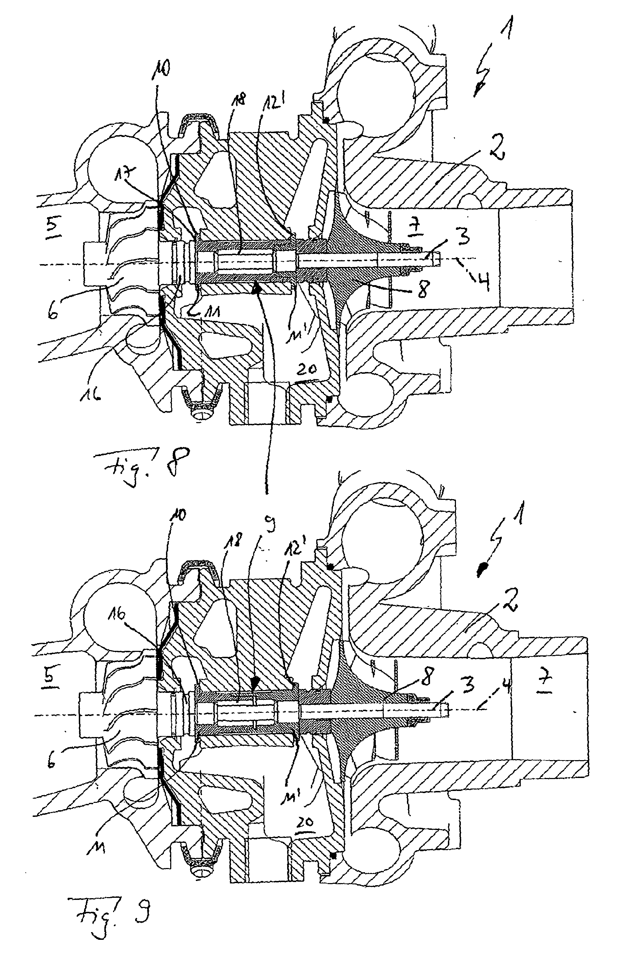

Die erfindungsgemäße Lagereinrichtung 9 (vgl. insbesondere Fig. 8 ff.) ermöglicht einen deutlich vereinfachten Zusammenbau beziehungsweise eine deutlich vereinfachte Montage der Ladeeinrichtung 1, da zunächst beispielsweise das Turbinenrad 6 zusammen mit einem Lagerelement 16 und der bereits auf die Welle 3 aufgeschobenen Lagerbuchse 11 in das Gehäuse eingesteckt werden können. Anschließend wird die Lagerbuchse 11' von der entgegengesetzten Seite auf die Welle 3 aufgeschoben und anschließend das Lagerelement 16' sowie das Verdichterrad 8 auf der Verdichterradseite 7 angeordnet. Eine wie bisher erforderliche Verpressung der Lagerbuchsen 11, 11' im Gehäuse 2 der Ladeeinrichtung 1 ist somit nicht mehr erforderlich. Gleichzeitig lassen sich mit den erfindungsgemäßen, lediglich lose eingesteckten Lagerbuchsen 11, 11' Wartungsarbeiten an der Lagereinrichtung 9 und insbesondere ein Austausch der Lagerbuchsen 11, 11' deutlich leichter bewerkstelligen, wodurch auch Kostenvorteile realisierbar sind.
Zwischen der jeweiligen Lagerbuchse 11, 11' und dem Gehäuse 2 verbleibt darüber hinaus ein Radialspalt, so dass bei den beiden Lagerbuchsen 11, 11' ein Lagerfluidstrom auch zwischen der jeweiligen Lagerbuchse 11, 11' und dem Gehäuse 2 strömen kann. Dies hat den besonderen Vorteil, dass die Lagerbuchsen 11, 11' gegenüber dem Gehäuse 2 schwingungsgedämpft gelagert sind und dadurch eine Übertragung von Schwingungen von den Lagerbuchsen 11, 11' auf das Gehäuse 2 der Ladeeinrichtung 1 zumindest reduziert werden kann.

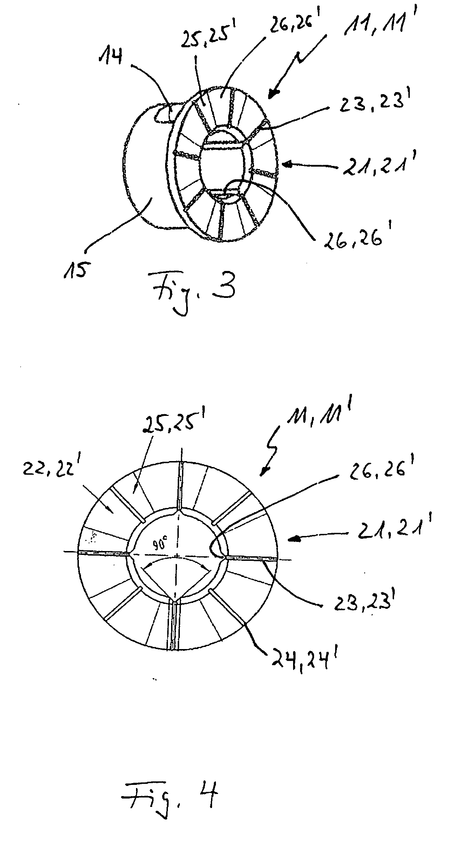

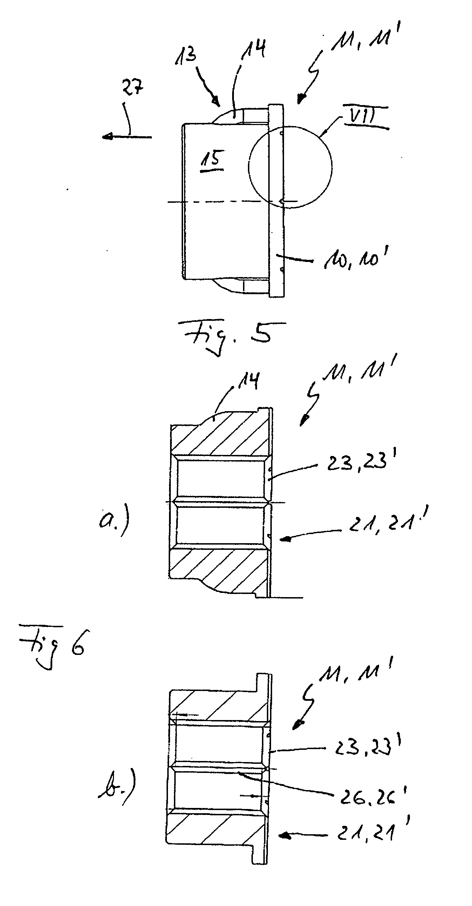

Wie den Fig. 1 und 2 zu entnehmen ist, drehen sich bei der Ladeeinrichtung 1 die Welle 3, nicht jedoch die Lagerbuchsen 11 und 11'. Diese werden vielmehr von einer Verdrehsicherung 13 (vgl. auch die Fig. 3 und 5) an einer Verdrehung gehindert. Die Verdrehsicherung 13 kann dabei in der Art zumindest einer lagerbuchsenseitig nach radial außen vorstehenden Kontur ausgebildet sein, die in eine gehäuseseitige Ausnehmung eingreift. Gemäß den Fig. 3 und 5 ist die Kontur durch eine Axialrippe 14 auf einer Außenmantelfläche 15 der jeweiligen Lagerbuchse 11, 11' gebildet, die in eine komplementär dazu ausgebildete und gehäuseseitig angeordnete Axialnut eingreift. Denkbar ist selbstverständlich auch, dass die vorstehende Kontur am Gehäuse ausgebildet ist und die zugehörige Ausnehmung an der Lagerbuchse.

Axial benachbart zur jeweiligen Lagerbuchse 11, 11' ist verdichterradseitig und turbinenradseitig jeweils ein Lagerelement 16, 16' vorgesehen, welches jeweils unter Bildung des Axialspaltes 17, 17' zu einer der beiden Lagerbuchsen 11, 11' angeordnet ist. Gemäß der Fig. 2 ist dabei das Lagerelement 16 integrativer Bestandteil der Welle 3, wobei auch denkbar ist, dass das Lagerelement 16, wie in Fig. 1 gezeigt, als separates Bauteil ausgebildet ist.

In Axialrichtung zwischen den beiden Lagerbuchsen 11 und 11' ist ein Lagerfluidraum 18 vorgesehen, welcher mit einer Lagerfluidzuführleitung 19 kommunizierend verbunden ist und über diese mit Lagerfluid versorgt wird. Das im Lagerfluidraum 18 vorhandene Lagerfluid, insbesondere ein Schmierfett oder ein Öl, kann dabei in Axialrichtung sowohl zwischen dem Gehäuse 2 und der jeweiligen Lagerbuchse 11, 11' als auch zwischen der jeweiligen Lagerbuchse 11, 11' und der Welle 3 strömen. In letzterem Fall gelangt das Lagerfluid zum Axialspalt 17, 17' und wird dort aufgrund einer Drehbewegung des eine Wandung des Axialspaltes 17, 17' bildenden, zugehörigen Lagerelementes 16, 16' radial nach außen in einen drucklosen Lagerfluidsammelraum 20 befördert.

Der Transport des Lagerfluides in den Lagerfluidsammelraum 20 wird dabei zusätzlich von der besonderen Ausführungsform einer stirnseitigen Axialfläche 21, 21' der Lagerbuchsen 11, 11' unterstützt. Die jeweilige stirnseitige Axialfläche 21, 21' weist kreissegmentartige Rampen 22 und 22' auf, wobei jede Rampe 22, 22' in Umfangsrichtung orientiert ist, das heißt ansteigt beziehungsweise abfällt und von einem als Radialnut 23, 23' ausgebildeten Rampengrund 24, 24' zu einem kreissegmentartigen Stirnflächenabschnitt 25, 25' ansteigt. Zur Versorgung des Axialspaltes 17, 17' mit Lagerfluid weist jede Lagerbuchse 11, 11' axiale Innennuten 26, 26' auf, wovon jede mit einer der Radialnuten 23, 23' kommunizierend verbunden ist, so dass das Lagerfluid über die axialen Innennuten 26, 26' in die zugehörigen Radialnuten 23, 23' strömen kann. Das Lagerfluid gelangt demnach über die Lagerfluidzuführleitung 19 in den Lagerfluidraum 18 und danach entweder über einen Radialspalt zwischen dem Gehäuse 2 und der jeweiligen Lagebuchse 11, 11' oder über die axiale Innennuten 26, 26' und den Axialspalt 17, 17' in den Lagerfluidsammelraum 20.

Wie der Fig. 4 zu entnehmen ist, können die axialen Innennuten 26 beispielsweise einen rechtwinkligen Nutengrund aufweisen, wobei die gemäß den Fig. 4 bis 6 gezeichnete Anzahl der axialen Innennuten 26 rein exemplarisch verstanden werden soll, so dass zumindest eine axiale Innennut 26 vorgesehen ist.

Aus den Fig. 5 und 6a ist erkennbar, dass die als Axialrippe 14 ausgebildete Verdrehsicherung 13 in Einsteckrichtung 27 vorne abgerundet ausgebildet ist, was ein Einstecken der jeweiligen Lagerbuchse 11, 11' in die gehäuseseitige Ausnehmung erleichtert.

Generell wird durch die erfindungsgemäße Lagereinrichtung 9 eine Montage deutlich vereinfacht, da die Lagerbuchsen 11, 11' nicht in das Gehäuse 2 eingepresst werden und die Verdrehsicherung durch ein zusätzlich zu montierendes Teil realisiert werden muss, sondern lediglich eingesteckt wird. Die Verdrehsicherung 13 ist dabei schon Bestandteil der Lagerbuchse 11, 11'. Dadurch, dass die Lagerbuchsen 11, 11' einen jeweiligen Flansch 10, 10' aufweisen, sind sie darüber hinaus zumindest in eine Richtung axial fixiert.

Um einen zuverlässigen Druckaufbau zu gewährleisten sowie die axiale Tragfähigkeit der Lagereinrichtung 9 zu erhöhen, befinden sich auf der stirnseitigen Axialfläche 21, 21' die bereits in den vorherigen Absätzen erwähnten Rampen 22, 22' wobei ein Anstieg der jeweiligen Rampen 22, 22' in Umfangsrichtung immer in der gleichen Richtung erfolgt.

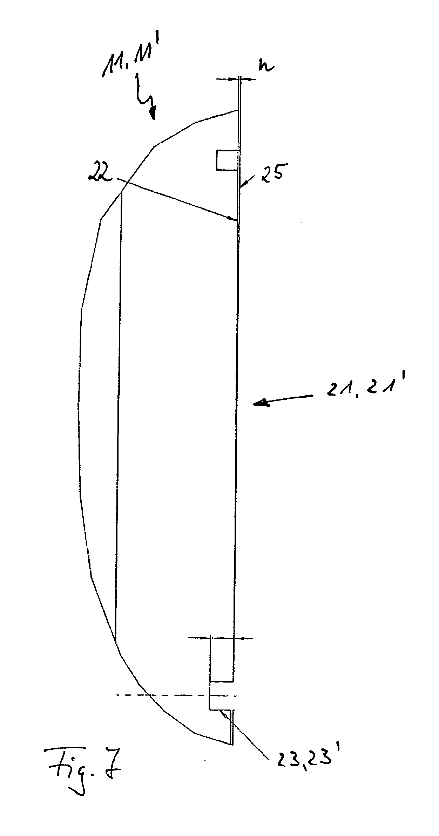

Gemäß der Fig. 7 ist die in Fig. 5 eingekreiste und mit der Zahl VII bezeichnete Detaildarstellung gezeigt. Erkennbar sind dabei der im Wesentlichen ebene Stirnflächenabschnitt 25 sowie die Rampe 22. Die Höhe der Rampen 22 wird dabei in Abhängigkeit, beispielsweise des zu fördernden Lagerfluidstroms gewählt, wobei der Anstieg der Rampe 22 vorzugsweise gleichmäßig ausgebildet ist.

Eine Rampenhöhe h der Rampe 22 beträgt dabei vorzugsweise wenige hundertstel Millimeter.

Gemäß den Fig. 8 und 9 ist eine erfindungsgemäße Lagereinrichtung 9 gezeigt, bei welcher die beiden Lagerbuchsen 11, 11' miteinander verbunden sind. Die Verbindung kann dabei beispielsweise über eine Presspassung oder eine Spielpassung erfolgen. Denkbar ist auch, dass die beiden Lagerbuchsen 11, 11' miteinander verklebt oder verschraubt sind.

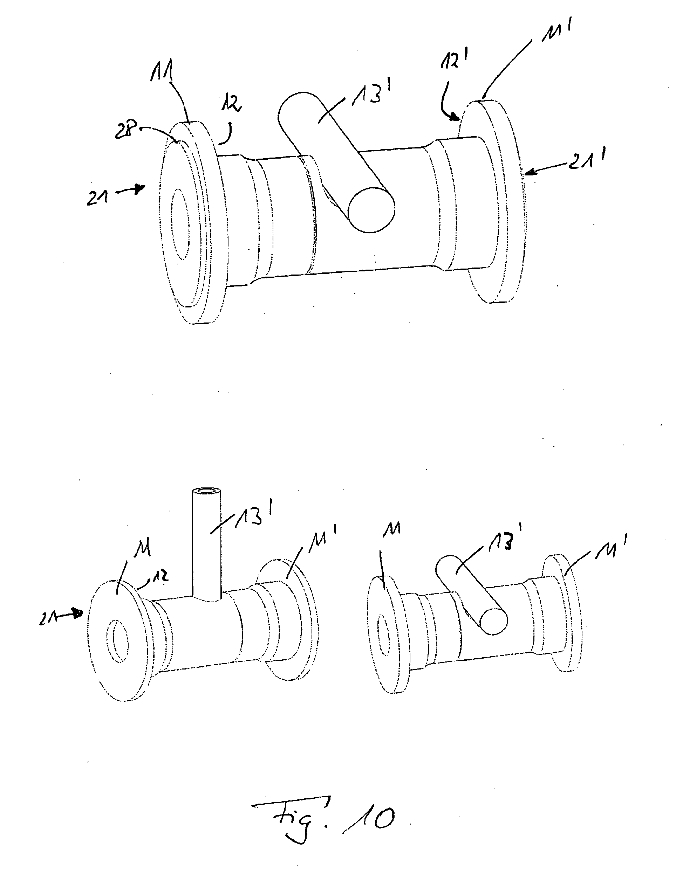

Betrachtet man die Fig. 10, so ist erkennbar, dass die beiden miteinander verbundenen Lagerbuchsen 11, 11' über eine gemeinsame Verdrehsicherung 13' gesichert sind, wodurch eine "halb-schwimmende" Lagerung erreicht wird. Denkbar ist aber auch ein Weglassen der Verdrehsicherung 13', so dass sich die beiden Lagerbuchsen 11, 11' frei drehen können. Die axiale Stirnfläche 21, 21' ist dabei üblicherweise ebenfalls mit Schrägen bzw. Rampen versehen, die gemäß der Fig. 10 jedoch nicht dargestellt sind. An der Anlagefläche 12, 12' und/oder an der axialen Stirnfläche 21, 21' eine Radialstufe 28 zu Verringerung der Reibung angeordnet ist.

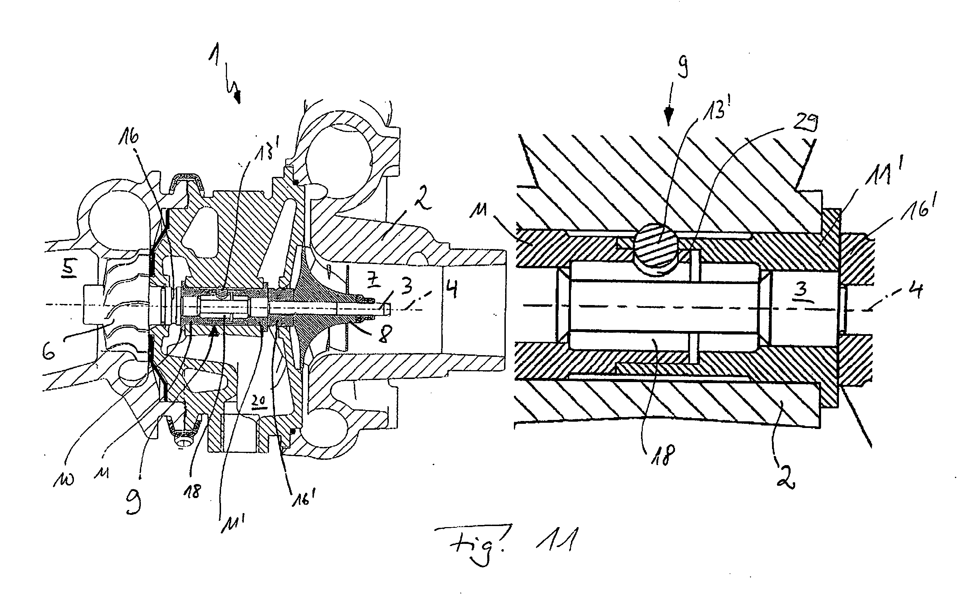

Über die Verdrehsicherung 13' kann optional auch ein Versorgungskanal 29 zu Versorgung der Lagereinrichtung 9 mit Schmierstoff, insbesondere mit Öl, realisiert werden, wie dies beispielsweise in der rechten Detaildarstellung in Fig. 11 dargestellt ist. Darüber hinaus bietet die Verdrehsicherung 13' die Möglichkeit einer einfachen Positionierung der Lagereinrichtung 9 bezüglich des Gehäuses 2, sofern, wie dies in Fig. 11 dargestellt ist, die Verdrehsicherung 13' nicht nur in die Lagerbuchsen 11, 11', sondern zugleich auch in eine gehäuseseitige Ausnehmung eingreift.

## Patentansprüche

1. Lagereinrichtung (9), insbesondere für eine, ein Verdichterrad (8) und ein Turbinenrad (6) tragende Welle (3) in einem Gehäuse (2) eines Abgasturboladers (1),
- wobei zwei, jeweils stirnseitig einen radialen Flansch (10, 10') aufweisende Lagerbuchsen (11, 11') vorgesehen sind, die so angeordnet sind, dass ihre Flansche (10, 10') voneinander abgewandt sind,
- wobei sich die beiden Lagerbuchsen (11, 11') über ihren jeweiligen Flansch (10, 10') axial an einer zugehörigen gehäuseseitigen Anlagefläche (12, 12') abstützen können,
- wobei die beiden Lagerbuchsen (11, 11') als hydrodynamische Gleitlager ausgebildet sind, bei denen ein Lagerfluidstrom zumindest zwischen der jeweiligen Lagerbuchse (11, 11') und der zu lagernden Welle (3) strömen kann.
**dadurch gekennzeichnet,**
**dass** die beiden Lagerbuchsen (11, 11') miteinander verbunden sind.

2. Lagereinrichtung nach Anspruch 1,
**dadurch gekennzeichnet,**
**dass** zwischen der jeweiligen Lagerbuchse (11, 11') und dem Gehäuse (2) ein Radialspalt verbleibt, so dass bei den beiden Lagerbuchsen (11, 11') ein Lagerfluidstrom auch zwischen der jeweiligen Lagerbuchse (11, 11') und dem Gehäuse (2) strömen kann.

3. Lagereinrichtung nach Anspruch 1 oder 2,
**dadurch gekennzeichnet,**
**dass** jede Lagerbuchse (11, 11') zumindest eine Verdrehsicherung (13) aufweist.

4. Lagereinrichtung nach Anspruch 3,
**dadurch gekennzeichnet,**
**dass** die wenigstens eine Verdrehsicherung (13) in der Art zumindest einer lagerbuchsenseitig nach radial außen vorstehenden Kontur ausgebildet ist, die in eine gehäuseseitige Ausnehmung eingreifen kann.

5. Lagereinrichtung nach Anspruch 4,
**dadurch gekennzeichnet,**
**dass** die Kontur durch eine Axialrippe (14) auf der Außenmantelfläche (15) der jeweiligen Lagerbuchse (11, 11') gebildet ist, die in eine komplementär dazu ausgebildete gehäuseseitige Axialnut eingreifen kann.

6. Lagereinrichtung nach einem der Ansprüche 1 bis 5,
**dadurch gekennzeichnet,**
**dass** jeweils ein Lagerelement (16, 16') vorgesehen ist, welches jeweils unter Bildung eines Axialspaltes (17, 17') zu einer der beiden Lagerbuchsen (11, 11') angeordnet ist und die Welle (3) am Gehäuse (2) lagert.

7. Lagereinrichtung nach einem der Ansprüche 1 bis 6,
**dadurch gekennzeichnet,**
**dass** eine stirnseitige Axialfläche (21, 21') der Lagerbuchse (11, 11') kreissegmentartige Rampen (22, 22') aufweist, wobei jede Rampe (22, 22') in Umfangsrichtung orientiert ist und von einem als Radialnut (23, 23') ausgebildeten Rampengrund (24, 24') zu einem kreissegmentartigen Stirnflächenabschnitt (25, 25') ansteigt.

8. Lagereinrichtung nach Anspruch 7,
**dadurch gekennzeichnet,**
- **dass** jede Lagerbuchse (11, 11') axiale Innennuten (26, 26') aufweist, wovon jede mit einer der Radialnuten (23, 23') kommunizierend verbunden ist, so dass das Lagerfluid über die axialen Innennuten (26, 26') in die zugehörigen Radialnuten (23, 23') strömen kann, und/oder
- **dass** in Axialrichtung zwischen den beiden Lagerbuchsen (11, 11') ein Lagerfluidraum (18) vorgesehen ist, welcher einerseits über die beiden axialen Innennuten (26, 26') mit den zugehörigen Radialnuten (23, 23') und andererseits mit einer Lagerfluidzuführleitung (19) kommunizierend verbunden ist.

9. Lagereinrichtung nach einem der Ansprüche 1 bis 8,
**dadurch gekennzeichnet,**
**dass** das Lagerfluid Öl, Kühlmittel oder Wasser ist.

10. Lagereinrichtung nach einem der Ansprüche 1 bis 9,
**dadurch gekennzeichnet,**
**dass** die beiden Lagerbuchsen (11,11') über eine Presspassung oder eine Spielpassung miteinander verbunden sind.

11. Lagereinrichtung nach einem der Ansprüche 1 bis 10,
**dadurch gekennzeichnet,**
**dass** die beiden Lagerbuchsen (11,11') miteinander verklebt oder verschraubt sind.

12. Lagereinrichtung nach Anspruch 10 oder 11,
**dadurch gekennzeichnet,**
**dass** die beiden Lagerbuchsen (11,11') über wenigstens eine gemeinsame Verdrehsicherung (13') gesichert sind.

13. Lagereinrichtung nach einem der Ansprüche 10 bis 12,
**dadurch gekennzeichnet,**
**dass** an der Anlagefläche (12,12') und/oder an der axialen Stirnfläche (21,21') eine Radialstufe (28) zu Verringerung der Reibung angeordnet ist.

14. Lagereinrichtung nach einem der Ansprüche 1, 2, 6 bis 11 und 13,
**dadurch gekennzeichnet,**
**dass** Lagerbuchse(n) (11,11') frei drehbar gelagert sind und auf ihren den jeweiligen Anlageflächen (12,12') zugewandten Seiten, das heißt auf ihren den Stirnseiten (11,11') gegenüberliegenden Seiten kreissegmentartige Rampen (22,22') aufweisen.

15. Ladeeinrichtung (1), insbesondere ein Abgasturbolader mit einer Lagereinrichtung (9) nach einem der Ansprüche 1 bis 14.

## Claims

1. A bearing device (9), more preferably for a shaft (3) carrying a compressor wheel (8) and a turbine wheel in a housing (2) of an exhaust gas turbocharger (1),
- wherein two bearing bushes (11, 11') each comprising a radial flange (10, 10') at the face end are provided, which are arranged so that their flanges (10, 10') are facing away from each other,
- wherein the two bearing bushes (11, 11') via their respective flange (10, 10') can support themselves on an associated bearing surface (12, 12') on the housing side,
- wherein the two bearing bushes (11, 11') are designed as hydrodynamic slide bearings, wherein a bearing fluid flow can flow at least between the respective bearing bush (11, 11') and the shaft (3) to be mounted,
**characterized in that** the two bearing bushes (11, 11') are connected with each other.

2. The bearing device according to Claim 1,
**characterized in that**
between the respective bearing bush (11, 11') and the housing (2) a radial gap remains so that at the two bearing bushes (11, 11') a bearing fluid flow can also flow between the respective bearing bush (11, 11') and the housing (2).

3. The bearing device according to Claim 1 or 2,
**characterized in that**
each bearing bush (11, 11') comprises at least one anti-rotation safeguard (13).

4. The bearing device according to Claim 3,
**characterized in that**
the at least one anti-rotation safeguard (13) is designed in the manner of at least one contour radially protruding outwardly on a bearing bush end, which can engage in a clearance on the housing end.

5. The bearing device according to Claim 4,
**characterized in that**
the contour is formed through an axial rib (14) on the outer lateral surface (15) of the respective bearing bush (11, 11'), which can engage in an axial groove on the housing end complementarily designed thereto.

6. The bearing device according to any one of the Claims 1 to 5,
**characterized in that**
a bearing element (16, 16') each is provided, each of which is arranged relative to one of the bearing bushes (11, 11') subject to the formation of an axial gap (17, 17') and mounts the shaft (3) on the housing (2).

7. The bearing device according to any one of the Claims 1 to 6,
**characterized in that**
an axial surface (21, 21') of the bearing bush (11, 11') on the face end comprises circular segment-like ramps (22, 22') wherein each ramp (22, 22') is orientated in circumferential direction and rises from a ramp base (24, 24') designed as radial groove (23, 23') to a circular segment-like end face section (25, 25').

8. The bearing device according to Claim 7,
**characterized in that**
- each bearing bush (11, 11') comprises axial internal grooves (26, 26'), of which each is connected with one of the radial grooves (23, 23') in a communicating manner, so that the bearing fluid via the axial internal grooves (26, 26') can flow into the associated radial grooves (23, 23'), and/or
- in axial direction between the two bearing bushes (11, 11') a bearing fluid space (18) is provided, which on the one hand is connected with the associated radial grooves (23, 23') via the two axial interior grooves (26, 26') and on the other hand with a bearing fluid feed line (19) in a communicating manner.

9. The bearing device according to any one of the Claims 1 to 8,
**characterized in that**
the bearing fluid is oil, coolant or water.

10. The bearing device according to any one of the Claims 1 to 9,
**characterized in that**
the two bearing bushes (11, 11') are connected with each other via a press fit or a clearance fit.

11. The bearing device according to any one of the Claims 1 to 10,
**characterized in that**
the two bearing bushes (11, 11') are glued together or screwed together.

12. The bearing device according to Claim 10 or 11,
**characterized in that**
the two bearing bushes (11, 11') are secured via at least one common anti-rotation safeguard (13').

13. The bearing device according to any one of the Claims 10 to 12,
**characterized in that**
on the bearing surface (12, 12') and/or on the axial end face (21, 21') a radial step (28) for reducing the friction is arranged.

14. The bearing device according to any one of the Claims 1, 2, 6 to 11 and 13,
**characterized in that**
bearing bush(es) (11, 11') are mounted freely rotatably and their sides facing the respective bearing surfaces (12, 12'), that is on their sides located opposite the face ends (11, 11'), comprise circular segment-like ramps (22, 22').

15. A charging device (1), more preferably an exhaust gas turbocharger with a bearing device (9) according to any one of the Claims 1 to 14.

## Revendications

1. Dispositif de palier (9), en particulier pour un arbre (3) portant une roue de compresseur (8) et une roue de turbine (6) dans un carter (2) d'un turbocompresseur à gaz d'échappement (1),
- deux coussinets (11, 11') présentant chacun sur le côté avant une bride (10, 10') radiale étant prévus, lesquels sont disposés de sorte que leurs brides (10, 10') sont opposées les unes aux autres,
- les deux coussinets (11, 11') pouvant s'appuyer par le biais de leur bride (10, 10') respective axialement sur une surface d'appui (12, 12') spécifique côté carter,
- les deux coussinets (11, 11') étant conçus sous forme de paliers lisses hydrodynamiques, sur lesquels un flux de fluide de palier peut circuler au moins entre le coussinet (11, 11') respectif et l'arbre (3) à loger,
**caractérisé en ce que**
les deux coussinets (11, 11') sont reliés l'un à l'autre.

2. Dispositif de palier selon la revendication 1,
**caractérisé en ce que**
une fente radiale reste entre le coussinet (11, 11') respectif et le carter (2), de sorte que, dans les cas des deux coussinets (11, 11'), un flux de fluide de palier peut circuler également entre le coussinet (11, 11') respectif et le cartier (2).

3. Dispositif de palier selon la revendication 1 ou 2,
**caractérisé en ce que**
chaque coussinet (11, 11') présente au moins une sécurité de torsion (13).

4. Dispositif de palier selon la revendication 3,
**caractérisé en ce que**
la au moins sécurité de torsion (13) est conçue sous la forme d'au moins un contour dépassant côté coussinet vers l'extérieur dans le sens radial, lequel peut s'engager dans un évidement côté carter.

5. Dispositif de palier selon la revendication 4,
**caractérisé en ce que**
le contour est formé par une nervure axiale (14) sur la surface d'enveloppe extérieure (15) du coussinet (11, 11') respectif, qui peut s'engager dans une gorge axiale côté carter conçue complémentaire à celui-ci.

6. Dispositif de palier selon l'une quelconque des revendications 1 à 5,
**caractérisé en ce que**
à chaque fois un élément de palier (16, 16') est prévu, lequel est disposé respectivement en formant une fente axiale (17, 17') par rapport à l'un des deux coussinets (11, 11') et l'arbre (3) est logé sur le carter (2).

7. Dispositif de palier selon l'une quelconque des revendications 1 à 6,
**caractérisé en ce**
**qu'**une surface axiale (21, 21') côté avant du coussinet (11, 11') présente des rampes (22, 22') de type segment de cercle, chaque rampe (22, 22') étant orientée dans le sens périphérique et croissant depuis un fond de rampe (24, 24') conçu sous forme de gorge radiale (23, 23') vers une partie de surface avant (25, 25') du type segment de cercle.

8. Dispositif de palier selon la revendication 7,
**caractérisé en ce que**
- chaque coussinet (11, 11') présente des gorges internes (26, 26') axiales, dont chacune est reliée en communiquant avec l'une des gorges radiales (23, 23'), de sorte que le fluide de palier peut circuler au moyen des gorges internes (26, 26') axiales dans les gorges radiales (23, 23') spécifiques et/ou
- **en ce qu'**un espace de fluide de palier (18) est prévu dans le sens axial entre les deux coussinets (11, 11'), lequel espace est relié en communiquant d'une part au moyen des deux gorges internes (26, 26') axiales aux gorges radiales (23, 23') spécifiques et d'autre part à une conduite d'arrivée de fluide de palier (19).

9. Dispositif de palier selon l'une quelconque des revendications 1 à 8,
**caractérisé en ce que**
le fluide de palier est de l'huile, du réfrigérant ou de l'eau.

10. Dispositif de palier selon l'une quelconque des revendications 1 à 9,
**caractérisé en ce que**
les deux coussinets (11, 11') sont reliés l'un à l'autre au moyen d'un ajustement serré ou d'un ajustement avec jeu.

11. Dispositif de palier selon l'une quelconque des revendications 1 à 10,
**caractérisé en ce que**
les deux coussinets (11, 11') sont collés ou vissés l'un avec l'autre.

12. Dispositif de palier selon la revendication 10 ou 11,
**caractérisé en ce que**
les deux coussinets (11, 11') sont bloqués au moyen d'au moins une sécurité de torsion (13') commune.

13. Dispositif de palier selon l'une quelconque des revendications 10 à 12,
**caractérisé en ce que**
un étage axial (28) pour la réduction du frottement est disposé sur la surface d'appui (12, 12') et/ou sur la surface avant (21, 21') axiale.

14. Dispositif de palier selon l'une quelconque des revendications 1, 2, 6 à 11 et 13,
**caractérisé en ce que**
des coussinets (11, 11') sont logés de façon à pouvoir tourner librement et présentent des rampes (22, 22') en forme de segment circulaire sur leurs côtés tournés vers les surfaces d'appui (12, 12') respectives, c'est-à-dire sur leurs côtés opposés aux côtés avant (11, 11').

15. Dispositif de chargement (1), en particulier un turbocompresseur à gaz d'échappement avec un dispositif de palier (9) selon l'une quelconque des revendications 1 à 14.
